# EUROPEAN PATENT APPLICATION

(11) **EP 3 766 941 A1**
(43) Date of publication of application: **20.01.2021**
(21) Application number: 19767260.3
(22) Date of filing: 08.03.2019
(51) Int. Cl.: C09D 11/322, B41J 2/01, C09D 11/38

(54) **ACTINIC-RAY-CURABLE INK-JET INK COMPOSITION AND PRINTING METHOD**

(30) Priority: 16.03.2018 JP 2018049861
(71) Applicant: Dai Nippon Toryo Co., Ltd., Osaka-shi, Osaka, 542-0081 (JP)
(72) Inventor: TAKIZAWA Shota, Otawara-shi, Tochigi 324-8516 (JP); HAYASHI Hiroki, Otawara-shi, Tochigi 324-8516 (JP); MINAMI Kazuo, Otawara-shi, Tochigi 324-8516 (JP)
(74) Representative: Palladino, Saverio Massimo
(86) International application number: PCT/JP2019/009436
(87) International publication number: WO 2019/176794

(57) **Abstract**

An object of the present invention is to provide an actinic radiation-curable inkjet ink composition exhibiting ejection stability, and a printing method using the ink composition. The object of the present invention has been accomplished by an actinic radiation-curable inkjet ink composition containing at least a monomer, a pigment, a polymerization initiator and a surface tension modifier, in which the actinic radiation-curable inkjet ink composition has a surface tension at 25°C of 20 to 35 mN/m and differs by 5 to 15 mN/m in surface tension from an unmodified ink composition not containing the surface tension modifier.

## Description

### TECHNICAL FIELD

The present invention relates to an actinic radiation-curable inkjet ink composition and a printing method using the ink composition.

### BACKGROUND ART

Various actinic radiation-curable inkjet ink compositions have recently been proposed, and for example, Patent Document 1 discloses that the ejection stability and ink wettability of an ultraviolet radiation-curable inkjet ink composition containing a pigment, an ultraviolet radiation-curable compound and a photoinitiator can be improved by further incorporating a specific silicone oil as a surface tension modifier into the ultraviolet radiation-curable inkjet ink composition.

On the other hand, when printing is carried out on a hydrophilic substrate with an inkjet printer, a drawback that the levelling of the printed matter is not always sufficient has occurred. To address this, Patent Document 2 proposes a technology of incorporating an acrylic surface modifier into an actinic radiation-curable inkjet ink composition.
Patent Document 1: Japanese Unexamined Patent Application, Publication No. 2003-147233
Patent Document 2: Japanese Unexamined Patent Application, Publication No. 2015-67765

### DISCLOSURE OF THE INVENTION

### Problems to be Solved by the Invention

These ink compositions are advantageous in that productivity can be increased because of the elimination of the steps of evaporation of water and/or an organic solvent and drying as well as the fast drying nature thereof, but have a disadvantage that ejection stability is not likely to be attained similarly to organic solvent-based inks and aqueous inks.

An object of the present invention is to provide an actinic radiation-curable inkjet ink composition exhibiting ejection stability and a printing method using the ink composition.

### Means for Solving the Problems

The present inventors have found that the object of the present invention is achieved by the following.

A first aspect of the present invention relates to an actinic radiation-curable inkjet ink composition containing at least a monomer, a pigment, a polymerization initiator and a surface tension modifier, in which the actinic radiation-curable inkjet ink composition has a surface tension at 25°C of 20 to 35 mN/m, and differs by 5 to 15 mN/m in surface tension from an unmodified ink composition not containing the surface tension modifier.

A second aspect of the present invention relates to the actinic radiation-curable inkjet ink composition according to the first aspect, in which the viscosity of the actinic radiation-curable inkjet ink composition at a temperature at the time of ink jetting is 5.5 to 7.5 mPa•s. A third aspect of the present invention relates to the actinic radiation-curable inkjet ink composition according to the first or second aspect, in which a monomer having a surface tension of 33 to 42 mN/m accounts for 50% by mass or more of the total monomers contained.

A fourth aspect of the present invention relates to the actinic radiation-curable inkjet ink composition according to any one of the first to third aspects, in which the surface tension modifier is a polyether-modified silicone-based surface modifier having an HLB of 7.6 to 12. A fifth aspect of the present invention relates to a printing method using an actinic radiation-curable inkjet ink composition containing at least a monomer, a pigment, a polymerization initiator and a surface tension modifier, in which the ink composition has a surface tension at 25°C of 20 to 35 mN/m and differs by 5 to 15 mN/m in surface tension from an unmodified ink composition not containing the surface tension modifier, the method including jetting the ink composition at such a temperature that the viscosity of the ink composition at the time of ink jetting of the ink composition is 5.5 to 7.5 mPa•s.

### Effects of the Invention

According to the present invention, an actinic radiation-curable inkjet ink composition exhibiting ejection stability can be obtained.

### PREFERRED MODE FOR CARRYING OUT THE INVENTION

Hereinafter, embodiments of the present invention will be described.

### <ACTINIC RADIATION-CURABLE INKJET INK COMPOSITION>

An actinic radiation-curable inkjet ink composition according to an embodiment of the present invention (hereinafter, may be also referred to as "ink composition") contains at least a monomer, a pigment, a polymerization initiator and a surface tension modifier, and is characterized in that the actinic radiation-curable inkjet ink composition has a surface tension at 25°C of 20 to 35 mN/m, and differs by 5 to 15 mN/m in surface tension from an unmodified ink composition not containing the surface tension modifier. In other words, it has been found that when the difference between the surface tension before the incorporation of the surface modifier and the surface tension after the incorporation of the surface modifier falls within a certain range, superior ejection stability can be attained.

### «Monomer»

In the ink composition according to the embodiment of the present invention, a monofunctional monomer and a polyfunctional monomer (having two to four functional groups) may be used alone, or in a combination thereof, as needed. The preferred monofunctional monomer is exemplified by 2-hydroxyethyl (meth)acrylate, 2-hydroxypropyl (meth)acrylate, 2-hydroxybutyl (meth)acrylate, 4-hydroxybutyl (meth)acrylate, 6-hydroxyhexyl (meth)acrylate, polyoxyethylene mono(meth)acrylate, polyoxypropylene mono(meth)acrylate, polyoxybutylene mono(meth)acrylate, stearyl (meth)acrylate, acryloylmorpholine, tridecyl (meth)acrylate, lauryl (meth)acrylate, N,N-dimethylacrylamide, decyl (meth)acrylate, phenoxyethyl (meth)acrylate, phenoxy diethylene glycol (meth)acrylate, isodecyl (meth)acrylate, isobornyl (meth)acrylate, dicyclopentanyl (meth)acrylate, dicyclopentenyl (meth)acrylate, isooctyl (meth)acrylate, octyl (meth)acrylate, dicyclopentenyloxyethyl (meth)acrylate, cyclohexyl (meth)acrylate, N-vinylcaprolactam, isoamyl (meth)acrylate, 2-ethylhexyl-diglycol (meth)acrylate, EO (ethylene oxide)-modified 2-ethylhexyl (meth)acrylate, neopentyl glycol (meth)acrylate benzoate, N-vinyl-2-pyrrolidone, N-vinylimidazole, tetrahydrofurfuryl (meth)acrylate, methoxy dipropylene glycol (meth)acrylate, (2-methyl-2-ethyl-1,3-dioxolan-4-yl)methyl (meth)acrylate, cyclic trimethylolpropane formal (meth)acrylate, and ethoxy-diethylene glycol (meth)acrylate, and the like.

The polyfunctional monomer according to the embodiment of the present invention is exemplified by 1,10-decanediol di(meth)acrylate, 2-methyl-1,8-octanediol di(meth)acrylate, 2-butyl-2-ethyl-1,3-propanediol di(meth)acrylate, 1,9-nonanediol di(meth)acrylate, 1,8-octanediol di(meth)acrylate, 1,7-heptanediol di(meth)acrylate, 1,6-hexanediol di(meth)acrylate, 1,4-butanediol di(meth)acrylate, polytetramethylene glycol di(meth)acrylate, 3-methyl-1,5-pentanediol di(meth)acrylate, hydroxypivalic acid neopentyl glycol di(meth)acrylate, neopentyl glycol di(meth)acrylate, PO (propylene oxide)-modified neopentyl glycol di(meth)acrylate, tetraethyleneglycol di(meth)acrylate, triethyleneglycol di(meth)acrylate, tripropylene glycol di(meth)acrylate, and dipropylene glycol di(meth)acrylate, trimethylolpropane tri(meth)acrylate, ethoxylated trimethylolpropane tri(meth)acrylate, propoxylated trimethylolpropane tri(meth)acrylate, ethoxylated glycerin tri(meth)acrylate, pentaerythritol tetra(meth)acrylate, ethoxylated pentaerythritol tetra(meth)acrylate, EO-modified diglycerin tetra(meth)acrylate, ditrimethylolpropane tetra(meth)acrylate, and the like.

A monomer preferred for accomplishing the present invention is exemplified by 4-hydroxybutyl (meth)acrylate, phenoxyethyl (meth)acrylate, phenoxy diethylene glycol (meth)acrylate, 1,4-butanediol di(meth)acrylate, 1,6-hexanediol di(meth)acrylate, 1,9-nonanediol di(meth)acrylate, triethyleneglycol di(meth)acrylate, dimethylol-tricyclodecane di(meth)acrylate, and trimethylolpropane tri(meth)acrylate. Note that the (meth)acrylate means a compound name that collectively denotes acrylates and methacrylates.

In the ink composition according to the embodiment of the present invention, it is preferable that a monomer having a surface tension of 33 to 42 mN/m accounts for 50% by mass or more of the total monomers contained. The ink composition is characterized in that the composition has a surface tension at 25°C of 20 to 35 mN/m and differs by 5 to 15 mN/m in surface tension from an unmodified ink composition not containing the surface tension modifier, and it is preferable to adjust the surface tension primarily by selection of the monomer.

The amount of the monofunctional monomer in the ink composition is preferably 25 to 85% by mass, and particularly preferably 40 to 85% by mass. The amount of the polyfunctional monomer is preferably 4 to 50% by mass, and particularly preferably 4 to 45% by mass.

The ink composition according to the embodiment of the present invention may contain an acrylate oligomer for improving the strength of a printing layer. The acrylate oligomer may be used either alone as one type, or in a combination of two or more types thereof.

The acrylate oligomer means an oligomer having one or more acryloyloxy groups (CH₂=CHCOO-), and the number of functional groups thereof is preferably 2 to 6. Moreover, the acrylate oligomer preferably has a molecular weight of 2,000 to 20,000. Note that the molecular weight means a polystyrene equivalent weight average molecular weight.

Specific examples of the acrylate oligomer include aminoacrylate oligomers [acrylate oligomers having a plurality of amino groups (-NH₂)], urethane acrylate oligomers [acrylate oligomers having a plurality of urethane bonds (-NHCOO-)], epoxy acrylate oligomers [acrylate oligomers having a plurality of epoxy groups], silicone acrylate oligomers [acrylate oligomers having a plurality of siloxane bonds (-SiO-)], ester acrylate oligomers [acrylate oligomers having a plurality of ester bonds (-COO-)] and butadiene acrylate oligomers [acrylate oligomers having a plurality of butadiene units], and the like.

Specific examples of other acrylate oligomer include: BEAMSET 502H, BEAMSET 505A-6, BEAMSET 550B, BEAMSET 575, and BEAMSET AQ-17 (manufactured by Arakawa Chemical Industries, Ltd.); UA-306H, UA-306I, UA-510H, and UF-8001G (manufactured by Kyoeisha Chemical Co., Ltd.); CN929, CN940, CN944B85, CN959, CN961E75, CN961H81, CN962, CN963A80, CN963B80, CN963E75, CN963E80, CN963J75, CN964, CN964A85, CN964E75, CN965, CN965A80, CN966A80, CN966B85, CN966H90, CN966J75, CN966R60, CN968, CN980, CN981, CN981A75, CN981B88, CN982A75, CN982B88, CN982E75, CN982P90, CN983, CN985B88, CN989, CN991, CN996, CN9001, CN9002, CN9004, CN9005, CN9006, CN9007, CN9008, CN9009, CN9010, CN9011, CN9014, CN9178, CN9788, and CN9893 (manufactured by Sartomer); U-4HA, U-6HA, U-6LPA, UA-1100H, UA-53H, UA-33H, U-200PA, UA-4200, and UA-122P (manufactured by Shin-Nakamura Chemical Co., Ltd.); NEW FRONTIER R-1214, NEW FRONTIER R-1301, NEW FRONTIER R-1304, NEW FRONTIER R-1306X, and NEW FRONTIER R-1150D (manufactured by DKS Co. Ltd.); EBECRYL 230, EBECRYL 244, EBECRYL 245, EBECRYL 264, EBECRYL 265, EBECRYL 270, EBECRYL 284, EBECRYL 285, EBECRYL 294, EBECRYL 1290, EBECRYL 4820, EBECRYL 5129, EBECRYL 8201, and EBECRYL 8402, (manufactured by Daicel-Cytec Company, Ltd.); UV-1700B, UV-7600B, UV-7605B, UV-6630B, UV-7000B, UV-7461TE, UV-3000B, UV-3310B, UV-3520TL, and UV-3700B (manufactured by Nippon Synthetic Chemical Industry Co., Ltd.); Art Resin UN-333, UN-1255, UN-2600, UN-2700, UN-5500, UN-5507, UN-6060P, UN-6200, UN-6300, UN-6301, UN-7600, UN-7700, UN-9000PEP, UN-9200A, UN-3320HA, UN-3320HC, and UN-904 (manufactured by Negami Chemical Industrial Co., Ltd); and the like.

Of these, urethane acrylate oligomers are preferable, and aliphatic urethane acrylate oligomers having no aromatic ring in the structure thereof are further preferable in light of weather resistance and adherability. Note that the content of the acrylate oligomer in the total mass of the ink composition is, for example, 1 to 10% by mass.

### <<Pigment>>

The ink composition according to the embodiment of the present invention may further contain a colorant such as a dye or a pigment, and preferably contains a pigment in light of weather resistance. Note that the content of the colorant in the ink composition is 0.1 to 15% by mass. In addition, the colorant may be used either alone as one type, or in a combination of two or more types thereof.

Specific examples of the colorant include:
C.I. Pigment Yellow 1, 2, 3, 4, 5, 6, 7, 9, 10, 12, 13, 14, 15, 16, 17, 24, 32, 34, 35, 36, 37, 41, 42, 43, 49, 53, 55, 60, 61, 62, 63, 65, 73, 74, 75, 77, 81, 83, 87, 93, 94, 95, 97, 98, 99, 100, 101, 104, 105, 106, 108, 109, 110, 111, 113, 114, 116, 117, 119, 120, 123, 124, 126, 127, 128, 129, 130, 133, 138, 139, 150, 151, 152, 153, 154, 155, 165, 167, 168, 169, 170, 172, 173, 174, 175, 176, 179, 180, 181, 182, 183, 184, 185, 191, 193, 194, 199, 205, 206, 209, 212, 213, 214, 215, and 219;
C.I. Pigment Orange 1, 2, 3, 4, 5, 13, 15, 16, 17, 19, 20, 21, 24, 31, 34, 36, 38, 40, 43, 46, 48, 49, 51, 60, 61, 62, 64, 65, 66, 67, 68, 69, 71, 72, 73, 74, and 81;
C.I. Pigment Red 1, 2, 3, 4, 5, 6, 7, 8, 9, 10, 11, 12, 14, 15, 16, 17, 18, 21, 22, 23, 31, 32, 38, 41, 48, 48:1, 48:2, 48:3, 48:4, 48:5, 49, 52, 52:1, 52:2, 53:1, 54, 57:1, 58, 60:1, 63, 64:1, 68, 81:1, 83, 88, 89, 95, 101, 104, 105, 108, 112, 114, 119, 122, 123, 136, 144, 146, 147, 149, 150, 164, 166, 168, 169, 170, 171, 172, 175, 176, 177, 178, 179, 180, 181, 182, 183, 184, 185, 187, 188, 190, 193, 194, 200, 202, 206, 207, 208, 209, 210, 211, 213, 214, 216, 220, 220, 221, 224, 226, 237, 238, 239, 242, 245, 247, 248, 251, 253, 254, 255, 256, 257, 258, 260, 262, 263, 264, 266, 268, 269, 270, 271, 272, and 279;
C.I. Pigment Violet 1, 2, 3, 3:1, 3:3, 5:1, 13, 15, 16, 17, 19, 23, 25, 27, 29, 31, 32, 36, 37, 38, 42, and 50; C.I. Pigment Blue 1, 15, 15:1, 15:2, 15:3, 15:4, 15:5, 15:6, 16, 17:1, 24, 24:1, 25, 26, 27, 28, 29, 36, 56, 60, 61, 62, 63, 75, 79, and 80;
C.I. Pigment Green 1, 4, 7, 8, 10, 15, 17, 26, 36, and 50; C.I. Pigment Brown 5, 6, 23, 24, 25, 32, 41, and 42; C.I. Pigment Black 1, 6, 7, 9, 10, 11, 20, 26, 28, 31, 32, and 34;
C.I. Pigment White 1, 2, 4, 5, 6, 7, 11, 12, 18, 19, 21, 22, 23, 26, 27, and 28;
aluminum flakes, glass flakes, hollow particles, and the like.

Of these, the following is preferable in light of weather resistance and color reproducibility of the printed matter: C.I. Pigment Black 7;
C.I. Pigment Blue 15:3, C.I. Pigment Blue 15:4, and C.I. Pigment Blue 28;
C.I. Pigment Red 101, and C.I. Pigment Red 122,
C.I. Pigment Red 202, and C.I. Pigment Red 254;
C.I. Pigment Red 282;
C.I. Pigment Violet 19;
C.I. Pigment White 7;
C.I. Pigment Yellow 42, and C.I. Pigment Yellow 120; and
C.I. Pigment Yellow 138, C.I. Pigment Yellow 139, C.I. Pigment Yellow 150, C.I. Pigment Yellow 151, C.I. Pigment Yellow 155, and C.I. Pigment Yellow 213.

It is preferable in light of the ejection stability that the pigment particles dispersed in the ink composition have a volume mean particle diameter of 0.05 to 0.4 µm and a volume maximum particle diameter of 0.2 to 1 µm. When the volume mean particle diameter is greater than 0.4 µm and the volume maximum particle diameter is greater than 1 µm, the ink composition tends to be difficult to stably eject. Note that the volume mean particle diameter and the volume maximum particle diameter can be measured using a measuring instrument utilizing dynamic light scattering.

In order to disperse the pigment, a pigment dispersing agent may be further added to the ink composition as needed. Note that the content of the pigment dispersing agent in the ink composition is, for example, 0.1 to 5% by mass. In addition, the pigment dispersing agent may be used either alone as one type, or in a combination of two or more types thereof.

### <<Polymerization Initiator>>

The polymerization initiator according to the embodiment of the present invention is a photoinitiator that acts to initiate polymerization of a polymerizable monomer upon irradiation with actinic radiation. The content of the photoinitiator in the ink composition is preferably 1 to 25% by mass, and more preferably 1 to 10% by mass. Further, to accelerate the initiation reaction by the photoinitiator, an auxiliary agent such as a photosensitizer may also be used in combination.

The photoinitiator is exemplified by a benzophenone-based compound, an acetophenone-based compound, a thiaxanthon-based compound, a phosphine oxide-based compound, and the like, and photoinitiators having an absorption wavelength range which overlaps as much as possible with the wavelength range of the actinic radiation used in the irradiation are preferable in light of the curing properties.

Specific examples of the photoinitiator include:
2,2-dimethoxy-1,2-diphenylethan-1-one;
1-hydroxy-cyclohexyl-phenyl-ketone;
2-hydroxy-2-methyl-1-phenylpropan-1-one;
benzophenone;
1-[4-(2-hydroxyethoxy)-phenyl]-2-hydroxy-2-methyl-1-propan-1-one;
2-hydroxy-1-{4-[4-(2-hydroxy-2-methylpropionyl)-benzyl]-phenyl}-2-methyl-propan-1-one;
phenylglyoxylic acid methyl ester;
2-methyl-1-[4-(methylthio)phenyl]-2-morpholinopropan-1-one;
2-benzyl-2-dimethylamino-1-(4-morpholinophenyl)-butanone;
2-dimethylamino-2-(4-methyl-benzyl)-1-(4-morpholine-4-ylphenyl)-butan-1-one;
bis(2,4,6-trimethylbenzoyl)-phenylphosphine oxide;
bis(2,6-dimethoxybenzoyl)-2,4,4-trimethyl-pentylphosphine oxide;
2,4,6-trimethylbenzoyl-diphenyl-phosphine oxide;
1,2-octanedione, 1-[4-(phenylthio)-2-(O-benzoyloxime)];
ethanone, 1-[9-ethyl-6-(2-methylbenzoyl)-9H-carbazol-3-yl]-, 1-(O-acetyloxime) ;
2,4-diethylthiaxanthon;
2-isopropylthioxanthon;
2-chlorothioxanthone, and the like.

Of these, in light of the curing properties of the ink, 2,2-dimethoxy-1,2-diphenylethan-1-one, 2-benzyl-2-dimethylamino-1-(4-morpholinophenyl)-butanone, 2,4,6-trimethylbenzoyl-diphenyl-phosphine oxide, bis(2,4,6-trimethylbenzoyl)-phenylphosphine oxide and 2,4-diethylthiaxanthon are preferable, and 2,4,6-trimethylbenzoyl-diphenyl-phosphine oxide are particularly preferable. Note that these photoinitiators may be used either alone as one type, or in a combination of two or more types thereof.

The actinic radiation-curable ink may further contain a light stabilizer. The light stabilizer absorbs ultraviolet radiation and acts to prevent deterioration caused by ultraviolet radiation. The light stabilizer is exemplified by a cyanoacrylate-based compound, a benzophenone-based compound, a benzoate-based compound, a benzotriazole-based compound, a hydroxyphenyltriazine-based compound, a benzylidene camphor-based compound, inorganic particulates, and the like, and of these, hydroxyphenyltriazine-based compounds that absorb ultraviolet radiation having a shorter wavelength are preferable in light of the curing properties of the ink. Light stabilizers having an absorption wavelength range which overlaps as little as possible with the wavelength of the actinic radiation used in the irradiation are preferable in light of the curing properties.

Specific examples of the light stabilizer include:
2,4-dihydroxybenzophenone;
2-hydroxy-4-methoxybenzophenone;
2-hydroxy-4-methoxybenzophenone-5-sulfonic acid;
2-hydroxy-4-octoxybenzophenone;
2-hydroxy-4-dodecyloxybenzophenone-2-hydroxy-4-benzyloxybenzophenone;
bis(5-benzoyl-4-hydroxy-2-methoxyphenyl)methane;
2,2'-dihydroxy-4-methoxybenzophenone;
2,2'-dihydroxy-4,4'-dimethoxybenzophenone;
2,2',4,4'-tetrahydroxybenzophenone;
2-hydroxy-4-methoxy-2'-carboxybenzophenone;
2-(2'-hydroxy-5'-methylphenyl)benzotriazole;
2-[2'-hydroxy-3',5'-bis(α,α-dimethylbenzyl)phenyl]benzotriazole;
2-(2'-hydroxy-3',5'-di-t-butylphenyl)benzotriazole;
2-(2'-hydroxy-3'-t-butyl-5'-methylphenyl)-5-chlorobenzotriazole;
2-(2'-hydroxy-3',5'-di-t-butylphenyl)-5-chlorobenzotriazole;
2-(2'-hydroxy-3',5'-di-t-amylphenyl)benzotriazole;
2-(2'-hydroxy-5'-t-octylphenyl)benzotriazole,
2,2'-methylene-bis[4-(1,1,3,3-tetramethylbutyl)-6-(2N-benzotriazol-2-yl)phenol];
a condensate of methyl-3-[3-t-butyl-5-(2H-benzotriazol-2-yl)-4-hydroxyphenyl]propionate and polyethylene glycol;
2-(2-hydroxyphenyl)benzotriazole;
2-(2'-hydroxy-5'-methylphenyl)benzotriazole;
2,6-di-t-butylphenyl-3',5'-di-t-butyl-4'-hydroxybenzoate;
hexadecyl-3,5-di-t-butyl-4-hydroxybenzoate, and the like. Note that these light stabilizers may be used either alone as one type, or in a combination of two or more types thereof.

The actinic radiation-curable ink may further contain a polymerization inhibitor. The polymerization inhibitor functions to react with an active radical generated in the ink and prevent a polymerization reaction from occurring. Moreover, it has been found that blending of the polymerization inhibitor into the actinic radiation-curable ink allows for further improvement in the storage stability. The content of the polymerization inhibitor with respect to the total mass of the ink is preferably 0.001 to 5% by mass, and more preferably 0.001 to 1% by mass.

The polymerization inhibitor is exemplified by a hydroquinone-based compound, a phenol-based compound, a phenothiazine-based compound, a nitroso-based compound, an N-oxyl-based compound, and the like.

Specific examples of the polymerization inhibitor include: phenol-based compounds such as phenol, o-, m- or p-cresol, 2-t-butyl-4-methylphenol, 6-t-butyl-2,4-dimethylphenol, 2,6-di-t-butyl-4-methylphenol, 2-t-butylphenol, 4-t-butylphenol, 2,4-di-t-butylphenol, 2-methyl-4-t-butylphenol, and 4-t-butyl-2,6-dimethylphenol; hydroquinone-based compounds such as hydroquinone, hydroquinone monomethyl ether, methylhydroquinone, 2,5-di-t-butylhydroquinone, 2-methyl-p-hydroquinone, 2,3-dimethylhydroquinone, trimethylhydroquinone 4-methylbenzcatechin, t-butylhydroquinone, 3-methylbenzcatechin, 2-methyl-p-hydroquinone, 2,3-dimethylhydroquinone, trimethylhydroquinone, t-butylhydroquinone, benzoquinone, t-butyl-p-benzoquinone, and 2,5-diphenyl-p-benzoquinone; phenothiazine-based compounds such as phenothiazine; nitroso-based compounds such as N-nitroso-N-phenylhydroxylamine ammonium, and N-nitroso-N-phenylhydroxylamine aluminum salt; N-oxyl-based compounds such as 4-hydroxy-2,2,6,6-tetramethylpiperidine-N-oxyl, 4-oxo-2,2,6,6-tetramethyl-piperidine-N-oxyl, and 4-methoxy-2,2,6,6-tetramethyl-piperidine-N-oxyl; and the like. Note that these polymerization inhibitors may be used either alone as one type, or in a combination of two or more types thereof.

### <<Surface Tension Modifier>>

It is preferable that the ink composition according to the embodiment of the present invention contains a surface modifier for the purpose of improving wettability with respect to the surface of a printing medium and the prevention of cissing. As used herein, the "surface modifier" means a substance that has a hydrophilic site and a hydrophobic site in the molecular structure thereof and enables the adjustment of the surface tension of the ink composition when added thereto.

Specific examples of the surface modifier which may be contained in the ink composition according to the embodiment of the present invention include: anionic surface modifiers such as dialkyl sulphosuccinates, alkylnaphthalenesulfonates, and fatty acid salts; nonionic surface modifiers such as polyoxyethylene alkyl ethers, polyoxyethylene alkyl allyl ethers, acetylene glycols, and polyoxyethylene-polyoxypropylene block copolymers; cationic surface modifiers such as alkylamine salts, and quaternary ammonium salts; silicone-based surface modifiers, fluorine-based surface modifiers, and the like.

In particular, the silicone-based surface modifiers and acrylic surface modifiers are preferable, and commercial products available from BYK-Chemie GmbH, Evonik Industries AG, Dow Corning Toray Co., Ltd., and the like may be used. These surface modifiers may be used either alone, or in a combination of two or more types thereof. Further, in the case of the silicone-based surface modifiers, polyether-modified silicone oils having an HLB of 7.6 to 12 are preferable. The content of the surface modifier in the ink composition according to the embodiment of the present invention may be appropriately selected depending on the intended use, but for example, is preferably 0.01 to 1% by mass in the ink composition.

Specific examples of the surface modifier include: BYK-300, BYK-302, BYK-306, BYK-307, BYK-310, BYK-313, BYK-315N, BYK-320, BYK-322, BYK-323, BYK-325, BYK-326, BYK-330, BYK-331, BYK-333, BYK-342, BYK-345, BYK-346, BYK-347, BYK-348, BYK-349, BYK-350, BYK-354, BYK-355, BYK-356, BYK-358N, BYK-361N, BYK-370, BYK-375, BYK-377, BYK-378, BYK-381, BYK-392, BYK-394, BYK-399, BYK-3440, BYK-3441, BYK-3455, BYK-3550, BYK-3560, BYK-3565, BYK-3760, BYK-DYNWET 800N, BYK-SILCLEAN 3700, BYK-SILCLEAN 3701, BYK-SILCLEAN 3720, BYK-UV3500, BYK-UV3505, BYK-UV3510, BYK-UV3530, BYK-UV3535, BYK-UV3570, BYK-UV3575, and BYK-UV3576 (each manufactured by BYK Japan KK); TEGO Flow 300, TEGO Flow 370, TEGO Flow 425, TEGO Flow ATF 2, TEGO Flow ZFS 460, TEGO Glide 100, TEGO Glide 110, TEGO Glide 130, TEGO Glide 406, TEGO Glide 410, TEGO Glide 411, TEGO Glide 415, TEGO Glide 432, TEGO Glide 435, TEGO Glide 440, TEGO Glide 450, TEGO Glide 482, TEGO GlideA 115, TEGO GlideB 1484, and TEGO GlideZG 400 (each manufactured by Evonik Japan Co., Ltd.);
501W ADDITIVE, FZ-2104, FZ-2110, FZ-2123, FZ-2164, FZ-2191, FZ-2203, FZ-2215, FZ-2222, FZ-5609, L-7001, L-7002, L-7604, OFX-0193, OFX-0309 FLUID, OFX-5211 FLUID, SF 8410 FLUID, SH3771, SH 3746 FLUID, SH 8400 FLUID, SH 8700 FLUID, and Y-7006 (each manufactured by Dow Corning Toray Co., Ltd.); KF-351A, KF-352A, KF-353, KF-354L, KF-355A, KF-615A, KF-640, KF-642, KF-643, KF-644, KF-945, KF-6004, KF-6011, KF-6012, KF-6015, KF-6017, KF-6020, KF-6204, X-22-2516, and X-22-4515 (each manufactured by Shin-Etsu Chemical Co., Ltd.); and the like.

Of these, 501W ADDITIVE, FZ-2104, FZ-2123, FZ-2215, L-7002, OFX-0309 FLUID, OFX-5211 FLUID, SH 8400 FLUID, KF-351A, KF-353, KF-355A, KF-615A, KF-642, KF-644, KF-6004, KF-6011, and KF-6204 are preferable in light of the structure and the HLB.

Note that the ink composition according to the embodiment of the present invention may further contain a pigment dispersing agent, as needed, to disperse the pigment. The content of the pigment dispersing agent in the ink composition is, for example, 0.1 to 5% by mass. In addition, the pigment dispersing agent may be used either alone as one type, or in a combination of two or more types thereof.

Specific examples of the pigment dispersing agent include:
ANTI-TERRA-U, ANTI-TERRA-U100,
ANTI-TERRA-204, ANTI-TERRA-205,
DISPERBYK-101, DISPERBYK-102,
DISPERBYK-103, DISPERBYK-106,
DISPERBYK-108, DISPERBYK-109,
DISPERBYK-110, DISPERBYK-111,
DISPERBYK-112, DISPERBYK-116,
DISPERBYK-130, DISPERBYK-140,
DISPERBYK-142, DISPERBYK-145,
DISPERBYK-161, DISPERBYK-162,
DISPERBYK-163, DISPERBYK-164,
DISPERBYK-166, DISPERBYK-167,
DISPERBYK-168, DISPERBYK-170,
DISPERBYK-171, DISPERBYK-174,
DISPERBYK-180, DISPERBYK-182,
DISPERBYK-183, DISPERBYK-184,
DISPERBYK-185, DISPERBYK-2000,
DISPERBYK-2001, DISPERBYK-2008,
DISPERBYK-2009, DISPERBYK-2020,
DISPERBYK-2025, DISPERBYK-2050,
DISPERBYK-2070, DISPERBYK-2096,
DISPERBYK-2150, DISPERBYK-2155,
DISPERBYK-2163, DISPERBYK-2164,
BYK-P104, BYK-P104S, BYK-P105,
BYK-9076, BYK-9077, BYK-220S, BYKJET-9150, and BYKJET-9151
(each manufactured by BYK Japan KK);
Solsperse 3000, Solsperse 5000,
Solsperse 9000, Solsperse 11200,
Solsperse 13240, Solsperse 13650,
Solsperse 13940, Solsperse 16000,
Solsperse 17000, Solsperse 18000,
Solsperse 20000, Solsperse 21000,
Solsperse 24000SC, Solsperse 24000GR,
Solsperse 26000, Solsperse 27000,
Solsperse 28000, Solsperse 32000,
Solsperse 32500, Solsperse 32550,
Solsperse 32600, Solsperse 33000,
Solsperse 34750, Solsperse 35100,
Solsperse 35200, Solsperse 36000,
Slsperse 36600, Solsperse 37500,
Solsperse 38500, Solsperse 39000,
Solsperse 41000, Solsperse 54000,
Solsperse 55000, Solsperse 56000,
Solsperse 71000, Solsperse 76500, and
Solsperse X300 (each manufactured by Lubrizol Corporation);
DISPARLON DA-7301, DISPARLON DA-325,
DISPARLON DA-375, and DISPARLON DA-234 (each manufactured by Kusumoto Chemicals, Ltd.);
FLOWLEN AF-1000, FLOWLEN DOPA-15B, FLOWLEN DOPA-15BHFS,
FLOWLEN DOPA-17HF, FLOWLEN DOPA-22, FLOWLEN DOPA-33, FLOWLEN G-600, FLOWLEN G-700, FLOWLEN G-700AMP, FLOWLEN G-700DMEA, FLOWLEN G-820, FLOWLEN G-900, FLOWLEN GW-1500, FLOWLEN KDG-2400, FLOWLEN NC-500, and FLOWLEN WK-13E (each manufactured by Kyoeisha Chemical Co., Ltd.);
TEGO Dispers 610, TEGO Dispers 610S,
TEGO Dispers 630, TEGO Dispers 650,
TEGO Dispers 652, TEGO Dispers 655,
TEGO Dispers 662C, TEGO Dispers 670,
TEGO Dispers 685, TEGO Dispers 700,
TEGO Dispers 710, TEGO Dispers 740W,
LIPOTIN A, LIPOTIN BL,
LIPOTIN DB, and LIPOTIN SB (each manufactured by Evonik Japan Co., Ltd.);
PB821, PB822, PN411, and PA111 (each manufactured by Ajinomoto Fine-Techno Co., Inc.);
TEXAPHOR 963, TEXAPHOR 964, TEXAPHOR 987, TEXAPHOR P60, TEXAPHOR P61, TEXAPHOR P63, TEXAPHOR 3250, TEXAPHOR SF71, TEXAPHOR UV20, and TEXAPHOR UV21 (each manufactured by Cognis);
Borchi Gen SN88, and Borchi Gen 0451 (each manufactured by Borchers Inc.); and the like.

### <Viscosity at Temperature at Time of Ink Jetting>

The ink composition according to the embodiment of the present invention has a viscosity at a temperature at the time of ink jetting of preferably 5.5 to 7.5 mPa•s. A viscosity at 25°C of 50 mPa•s or less will cause little difficulty in handling, but the viscosity at 25°C is preferably 25 mPa•s. The temperature at the time of the ink jetting is appropriately selected in accordance with an inkjet printer, and is preferably room temperature (20°C) to 60°C.

### <Other Additive>

The ink composition according to the embodiment of the present invention may contain an additive (component) other than the additives described above. Examples of such a component include, but are not particularly limited to, conventionally known penetration accelerating agents and humectants (moisturizers), as well as other additives, and examples of other additives include conventionally known fixatives, antifungal agents, preservatives, antioxidants, chelating agents, pH modifiers, and thickeners.

### <Method for Producing Ink Composition>

The ink composition according to the embodiment of the present invention may be prepared by mixing the monomer, the pigment, the polymerization initiator and the surface modifier, as well as various types of components appropriately selected as needed, and filtrating the resultant mixture, as needed, with a filter having a pore size less than about one tenth or less of the nozzle diameter of an inkjet print head to be used. The monomer and the pigment may be separately dispersed and subsequently mixed with other components.

### <Applicable Inkjet Printer>

The ink composition according to the embodiment of the present invention can be used in various inkjet printers. Examples of such an inkjet printer include inkjet printers that eject an ink composition on a charge control basis or piezo basis. In addition, the actinic radiation-curable inkjet ink composition according to the embodiment of the present invention can be suitably applied, in particular, to large-format inkjet printers, specifically, inkjet printers intended for printing on articles produced on an industrial line. Moreover, it is preferable that the ink jetting temperature of the inkjet printer is adjusted such that the viscosity of the ink composition is 5.5 to 7.5 mPa•s.

Note that irradiation of a printing layer with actinic radiation after printing using an inkjet printer to subject the printing layer to curing allows for the formation of a printing layer exhibiting favorable weather resistance. In addition, the wavelength range of the actinic radiation used in the irradiation for the curing of the printing layer preferably overlaps with the absorption wavelength range of the photoinitiator. With regard to the actinic radiation-curable inkjet ink composition according to the embodiment of the present invention, it is preferable that a principal wavelength of the actinic radiation is in the range of 360 to 425 nm.

### EXAMPLES

In the following, the present invention will be described in more detail by way of Examples, but the present invention is not limited to the following Examples in any way.

### <Ink Preparation Method>

Mixtures in accordance with the blend recipe specified in Tables 1 to 4 were obtained, and these mixtures were kneaded in a bead mill to homogenize them, whereby actinic radiation-curable inkjet inks according to Examples 1 to 26 and Comparative Examples 1 to 6 were prepared. The numerical values in the Tables are in parts by mass. The following evaluations were made on the ink compositions prepared above. The results are shown in Tables 5 to 8.

### <<Measuring Method of Surface Tension>>

Surface tension was measured at a temperature of 25°C using a surface tensiometer (CBVP-Z from Kyowa Interface Science Co., LTD.).

### <<Measuring Method of Viscosity>>

Viscosity was measured at an ejection temperature using a rheometer (Physica MCR301 from Anton Paar GmbH) at a shear rate of 10 s⁻¹.

### <<Continuous Ejectability>>

The actinic radiation-curable inkjet inks were intermittently ejected by an inkjet printer using the actinic radiation-curable inkjet inks for 10 minutes, and the ejection stability of the inkjet inks were determined according to the following criteria:
A: stable ejection is possible for 10 minutes;
B: failure of ejection does not occur, but slight flight deflection can be seen; and
C: failure of ejection occurs in during ejection.

### <<Re-ejectability>>

A nozzle check image was printed on a piece of copy paper using an inkjet printer, followed by waiting at the ejection temperature for 10 minutes, then a nozzle check image was again printed, and the re-ejectability was evaluated in accordance with the following criteria:
A: after resuming, stable ejection is possible from the first droplet;
B: after resuming, ejection of the first droplet does not fail, but slight flight deflection can be seen; and
C: after resuming, ejection of the first droplet fails.

### <<Mist>>

A nozzle check image was printed on a piece of copy paper using an inkjet printer, then the periphery of the image was observed with a microscope, and the condition of mist was evaluated.
A: no contamination by mist can be seen;
B: contamination by mist can be seen slightly but at a favorable level; and
C: contamination by mist can be seen at an unacceptable level.

**[Table 1]**

| | | Surface tension mN/m | | Example | | | | | | | | |
|---|---|---|---|---|---|---|---|---|---|---|---|---|
| | | | | 1 | 2 | 3 | 4 | 5 | 6 | 7 | 8 | 9 |
| Monofunctional monomer | 2-Phenoxyethyl acrylate | 39.7 | | 24.8 | 24.8 | 29.8 | 24.8 | 24.8 | 24.8 | 24.8 | 24.8 | 24.8 |
| | Phenoxy diethylene glycol acrylate | 40.5 | | | 10 | | | | | | | 10 |
| | 4-Hydroxybutyl acrylate | 37.9 | | | | | | | | | | |
| | Ethoxy-diethylene glycol acrylate | 32.1 | | 35 | 35 | 35 | 35 | 35 | 35 | 35 | 35 | 35 |
| | Isobornyl acrylate | 30.6 | | 15 | 10 | | 15 | 15 | 15 | 15 | | 10 |
| | Acryloylmorpholine | 44.8 | | | | | | | | | | |
| Polyfunctional monomer | 1,4-Butanediol diacrylate | 34.6 | | | | | | | | | | |
| | 1,6-Hexanediol diacrylate | 35.0 | | | | | | | | | | |
| | 1,9-Nonanediol diacrylate | 34.8 | Parts by mass | | | 10 | | | | | 20 | |
| | Triethylene glycol diacrylate | 39.1 | | | | | | | | | | |
| | Dimethylol-tricyclodecane diacrylate | 40.0 | | | | | | | | | | |
| | Trimethylolpropane triacrylate | 36.5 | | 10 | 5 | 10 | 10 | 10 | 10 | 10 | 5 | 5 |
| Pigment dispersing agent | Disperbyk-168 ^{a)} | - | | 2 | 2 | 2 | 2 | 2 | 2 | 2 | 2 | 2 |
| Pigment | C.I.Pigment Black 7 | - | | 3 | 3 | 3 | 3 | 3 | 3 | 3 | 3 | 3 |
| Photoinitiator | SpeedCure TPO ^{b)} | - | | 10 | 10 | 10 | 10 | 10 | 10 | 10 | 10 | 10 |
| Surface modifier | FZ-2123 ^{c)} | - | | | | | 0.2 | | | | | 0.2 |
| | L-7002 ^{d)} | - | | | | | | 0.2 | | | | |
| | Triethylene glycol diacrylate | - | | | | | | | 0.2 | | | |
| | KF-6012 ^{f)} | - | | 0.2 | 0.2 | 0.2 | | | | | 0.2 | |
| | SH3771 ⁹⁾ | - | | | | | | | | 0.2 | | |
| Total | | | | 100 | 100 | 100 | 100 | 100 | 100 | 100 | 100 | 100 |

**[Table 2]**

| | | Surface tension mN/m | | Example | | | | | | | | |
|---|---|---|---|---|---|---|---|---|---|---|---|---|
| | | | | 10 | 11 | 12 | 13 | 14 | 15 | 16 | 17 | 18 |
| Monofunctional monomer | 2-Phenoxyethyl acrylate | 39.7 | | 29.8 | 24.8 | 24.8 | 24.8 | 29.8 | 39.8 | 39.8 | 39.8 | 24.8 |
| | Phenoxy diethylene glycol acrylate | 40.5 | | | 10 | | | 30 | | | | 30 |
| | 4-Hydroxybutyl acrylate | 37.9 | | | | | | | | | | |
| | Ethoxy-diethylene glycol acrylate | 32.1 | | 35 | 30 | 35 | 35 | | | | | 5 |
| | Isobornyl acrylate | 30.6 | | | | | | | 40 | 40 | 40 | |
| | Acryloylmorpholine | 44.8 | | | | | | 25 | | | | |
| Polyfunctional monomer | 1,4-Butanediol diacrylate | 34.6 | | | | | | | | | | |
| | 1,6-Hexanediol diacrylate | 35.0 | | | | | | | | | | |
| | 1,9-Nonanediol diacrylate | 34.8 | Parts by mass | 10 | 20 | 20 | 20 | | | | | 25 |
| | Triethylene glycol diacrylate | 39.1 | | | | | | | | | | |
| | Dimethylol-tricyclodecane diacrylate | 40.0 | | | | | 5 | | | | | |
| | Trimethylolpropane triacrylate | 36.5 | | 10 | | 5 | | | 5 | 5 | 5 | |
| Pigment dispersing agent | Disperbyk-168 ^{a)} | - | | 2 | 2 | 2 | 2 | 2 | 2 | 2 | 2 | 2 |
| Pigment | C.I.Pigment Black 7 | - | | 3 | 3 | 3 | 3 | 3 | 3 | 3 | 3 | 3 |
| Photoinitiator | SpeedCure TPO ^{b)} | - | | 10 | 10 | 10 | 10 | 10 | 10 | 10 | 10 | 10 |
| Surface modifier | FZ-2123 ^{c)} | - | | 0.2 | 0.2 | 0.2 | 0.2 | 0.2 | 0.2 | | | 0.2 |
| | L-7002 ^{d)} | - | | | | | | | | 0.2 | | |
| | Triethylene glycol diacrylate | - | | | | | | | | | 0.2 | |
| | KF-6012 ^{f)} | - | | | | | | | | | | |
| | SH3771 ^{g)} | - | | | | | | | | | | |
| Total | | | | 100 | 100 | 100 | 100 | 100 | 100 | 100 | 100 | 100 |

**[Table 3]**

| | | Surface tension mN/m | | Example | | | | | | | |
|---|---|---|---|---|---|---|---|---|---|---|---|
| | | | | 19 | 20 | 21 | 22 | 23 | 24 | 25 | 26 |
| Monofunctional monomer | 2-Phenoxyethyl acrylate | 39.7 | | 24.8 | 24.8 | 24.8 | 24.8 | 24.8 | 24.8 | 24.8 | 39.8 |
| | Phenoxy diethylene glycol acrylate | 40.5 | | 30 | 30 | 30 | 30 | 20 | 20 | 20 | 10 |
| | 4-Hydroxybutyl acrylate | 37.9 | | 5 | | | | | | | |
| | Ethoxy-diethylene glycol acrylate | 32.1 | | | 5 | 5 | 5 | 20 | 20 | 20 | |
| | Isobornyl acrylate | 30.6 | | | | | | | | | 30 |
| | Acryloylmorpholine | 44.8 | | | | | | | | | |
| Polyfunctional monomer | 1,4-Butanediol diacrylate | 34.6 | | | 25 | | | | | | |
| | 1,6-Hexanediol diacrylate | 35.0 | | | | 25 | | | | | |
| | 1,9-Nonanediol diacrylate | 34.8 | Parts by mass | 25 | | | | 20 | 20 | 20 | |
| | Triethylene glycol diacrylate | 39.1 | | | | | 25 | | | | |
| | Dimethylol-tricyclodecane diacrylate | 40.0 | | | | | | | | | |
| | Trimethylolpropane triacrylate | 36.5 | | | | | | | | | 5 |
| Pigment dispersing agent | Disperbyk-168 ^{a)} | - | | 2 | 2 | 2 | 2 | 2 | 2 | 2 | 2 |
| Pigment | C.I.Pigment Black 7 | - | | 3 | 3 | 3 | 3 | 3 | 3 | 3 | 3 |
| Photoinitiator | SpeedCure TPO ^{b)} | - | | 10 | 10 | 10 | 10 | 10 | 10 | 10 | 10 |
| Surface modifier | FZ-2123 ^{c)} | - | | 0.2 | 0.2 | 0.2 | 0.2 | 0.2 | | | 0.2 |
| | L-7002 ^{d)} | - | | | | | | | 0.2 | | |
| | Triethylene glycol diacrylate | - | | | | | | | | 0.2 | |
| | KF-6012 ^{f)} | - | | | | | | | | | |
| | SH3771 ^{g)} | - | | | | | | | | | |
| Total | | | | 100 | 100 | 100 | 100 | 100 | 100 | 100 | 100 |

**[Table 4]**

| | | Surface tension mN/m | | Comparative Example | | | | | |
|---|---|---|---|---|---|---|---|---|---|
| | | | | 1 | 2 | 3 | 4 | 5 | 6 |
| Monofunctional monomer | 2-Phenoxyethyl acrylate | 39.7 | | 24.5 | | 29.8 | 44.5 | 40 | 25 |
| | Phenoxy diethylene glycol acrylate | 40.5 | | 15 | 15 | | 20 | | 30 |
| | 4-Hydroxybutyl acrylate | 37.9 | | | | | | | |
| | Ethoxy-diethylene glycol acrylate | 32.1 | | | | | | | 5 |
| | Isobornyl acrylate | 30.6 | | 25 | 5 | 50 | | 40 | |
| | Acryloylmorpholine | 44.8 | | | 64.8 | | | | |
| Poly functional monomer | 1,4-Butanediol diacrylate | 34.6 | | | | | | | |
| | 1,6-Hexanediol diacrylate | 35.0 | | | | | | | |
| | 1,9-Nonanediol diacrylate | 34.8 | Parts by mass | 20 | | | 20 | | 25 |
| | Triethylene glycol diacrylate | 39.1 | | | | | | | |
| | Dimethylol-tricyclodecane diacrylate | 40.0 | | | | | | | |
| | Trimethylolpropane triacrylate | 36.5 | | | | 5 | | 5 | |
| Pigment dispersing agent | Disperbyk-168 ^{a)} | - | | 2 | 2 | 2 | 2 | 2 | 2 |
| Pigment | C.I.Pigment Black 7 | - | | 3 | 3 | 3 | 3 | 3 | 3 |
| Photoinitiator | SpeedCure TPO ^{b)} | - | | 10 | 10 | 10 | 10 | 10 | 10 |
| Surface modifier | FZ-2123 ^{c)} | - | | 0.5 | 0.2 | 0.2 | 0.5 | | |
| | L-7002 ^{d)} | - | | | | | | | |
| | Triethylene glycol diacrylate | - | | | | | | | |
| | KF-6012 ^{f)} | - | | | | | | | |
| | SH3771 ^{g)} | - | | | | | | | |
| Total | | | | 100 | 100 | 100 | 100 | 100 | 100 |

**[Table 5]**

| | Example | | | | | | | | |
|---|---|---|---|---|---|---|---|---|---|
| | 1 | 2 | 3 | 4 | 5 | 6 | 7 | 8 | 9 |
| Ink viscosity at 40°C [mPa▪s] | 7 . 7 | 6.5 | 7.8 | 7 . 7 | 7.7 | 7.7 | 7 . 7 | 6.3 | 6.5 |
| Ink surface tension at 25°C [mN/m] | 26.7 | 26.4 | 26.0 | 24.0 | 24.5 | 24.3 | 26.5 | 23.8 | 25.4 |
| Unmodified ink composition surface tension at 25°C [mN/m] | 32.3 | 33.0 | 33.2 | 32.3 | 32.3 | 32.3 | 32.3 | 32.9 | 33.0 |
| Difference in surface tension | 5.6 | 6.6 | 7.2 | 8.3 | 7.8 | 8.0 | 5.8 | 9.1 | 7.6 |
| Ratio of monomer having surface tension of 33 to 40 mN/m | 41% | 47% | 59% | 41% | 41% | 41% | 41% | 59% | 47% |
| Continuous EjectaBility at 40°C | B | A | B | B | B | B | B | A | A |
| Re-ejectaBility at 40°C | B | B | B | A | A | A | B | B | A |
| Mist at 40°C | B | B | A | B | B | B | B | A | B |

**[Table 6]**

| | Example | | | | | | | | |
|---|---|---|---|---|---|---|---|---|---|
| | 10 | 11 | 12 | 13 | 14 | 15 | 16 | 17 | 18 |
| Ink viscosity at 40°C [mPa▪s] | 7.8 | 5.2 | 6.3 | 6. 9 | 6.9 | 7.0 | 7.0 | 7.0 | 6.6 |
| Ink surface tension at 25°C [mN/m] | 24.9 | 23.7 | 23.1 | 23.2 | 31.2 | 26.9 | 27.4 | 27.3 | 21.6 |
| Unmodified ink composition surface tension at 25°C [mN/m] | 33.2 | 33.5 | 32.9 | 33.0 | 38.7 | 32.9 | 32.9 | 32.9 | 35.5 |
| Difference in surface tension | 8.3 | 9.8 | 9.8 | 9.8 | 7.5 | 6.0 | 5.5 | 5.6 | 13.9 |
| Ratio of monomer having surface tension of 33 to 40 mN/m | 59% | 65% | 59% | 59% | 71% | 53% | 53% | 53% | 94% |
| Continuous EjectaBility at 40°C | B | B | A | A | A | A | A | A | A |
| Re-ejectaBility at 40°C | A | A | A | A | A | A | A | A | A |
| Mist at 40°C | A | A | A | A | A | A | A | A | A |

**[Table 7]**

| | Example | | | | | | | |
|---|---|---|---|---|---|---|---|---|
| | 19 | 20 | 21 | 22 | 23 | 24 | 25 | 26 |
| Ink viscosity at 40°C [mPa▪s] | 6.8 | 6.2 | 6.2 | 7.0 | 5.8 | 5.8 | 5.8 | 7.4 |
| Ink surface tension at 25°C [mN/m] | 21.8 | 22.0 | 21.9 | 22.5 | 23.4 | 23.7 | 23.5 | 26.9 |
| Unmodified ink composition surface tension at 25°C [mN/m] | 35.8 | 35.5 | 35.6 | 36.7 | 34.5 | 34.5 | 34.5 | 33.9 |
| Difference in surface tension | 14.0 | 13.5 | 13.7 | 14.2 | 11.1 | 10.8 | 11.0 | 7.0 |
| Ratio of monomer having surface tension of 33 to 40 mN/m | 100% | 94% | 94% | 94% | 76% | 76% | 76% | 65% |
| Continuous EjectaBility at 40°C | A | A | A | A | A | A | A | A |
| Re-ejectaBility at 40°C | A | A | A | A | A | A | A | A |
| Mist at 40°C | A | A | A | A | A | A | A | A |

**[Table 8]**

| | Comparative Example | | | | | |
|---|---|---|---|---|---|---|
| | 1 | 2 | 3 | 4 | 5 | 6 |
| Ink viscosity at 40°C [mPa▪s] | 6.1 | 6.8 | 7.0 | 6.4 | 7.1 | 6.6 |
| Ink surface tension at 25°C [mN/m] | 19.8 | 35.2 | 28.2 | 20.5 | 32.9 | 35.6 |
| Unmodified ink composition surface tension at 25°C [mN/m] | 33.5 | 40.3 | 31.9 | 36.0 | 32.9 | 35.6 |
| Difference in surface tension | 13.7 | 5.1 | 3.7 | 15.5 | 0 | 0 |
| Ratio of monomer having surface tension of 33 to 40 mN/m | 70% | 18% | 41% | 100% | 53% | 94% |
| Continuous EjectaBility at 40°C | C | B | B | C | B | B |
| Re-ejectaBility at 40°C | B | C | B | B | B | C |
| Mist at 40°C | B | B | C | B | C | C |

The blended agents shown in Tables 1 to 4 are as explained below:
a) pigment dispersing agent (manufactured by BYK Japan KK);
b) photoinitiator (manufactured by Lambson);
c) surface modifier (manufacture by Dow Corning Toray Co., Ltd.; HLB value: 10);
d) surface modifier (manufacture by Dow Corning Toray Co., Ltd.; HLB value: 8);
e) surface modifier (manufacture by Shin-Etsu Chemical Co., Ltd.; HLB value: 12);
f) surface modifier (manufacture by Shin-Etsu Chemical Co., Ltd.; HLB value: 7);
g) surface modifier (manufacture by Dow Corning Toray Co., Ltd.; HLB value: 15).

As is clear from Tables 5 to 8, when the actinic radiation-curable inkjet ink composition has a surface tension at 25°C of 20 to 35 mN/m and differs by 5 to 15 mN/m in surface tension from an unmodified ink composition not containing the surface tension modifier, the inkjet ink composition can exhibit favorable ejection stability (Examples 1 to 26) .

On the other hand, when the surface tension at 25°C is out of the range of 20 to 35 mN/m (Comparative Examples 1 and 2), or when the difference in surface tension between the inkjet ink composition and the unmodified ink composition not containing the surface tension modifier is out of the range of 5 to 15 mN/m (Comparative Examples 3, 4, 5 and 6), the ejection stability is insufficient.

## Claims

1. An actinic radiation-curable inkjet ink composition comprising at least a monomer, a pigment, a polymerization initiator and a surface tension modifier, wherein the actinic radiation-curable inkjet ink composition has a surface tension at 25°C of 20 to 35 mN/m, and differs by 5 to 15 mN/m in surface tension from an unmodified ink composition not comprising the surface tension modifier.

2. The actinic radiation-curable inkjet ink composition according to claim 1, wherein a viscosity of the actinic radiation-curable inkjet ink composition at a temperature at a time of ink jetting is 5.5 to 7.5 mPa•s.

3. The actinic radiation-curable inkjet ink composition according to claim 1 or 2, wherein a monomer having a surface tension of 33 to 42 mN/m accounts for 50% by mass or more of the total monomers comprised.

4. The actinic radiation-curable inkjet ink composition according to any one of claims 1 to 3, wherein the surface tension modifier is a polyether-modified silicone-based surface modifier having an HLB of 7.6 to 12.

5. A printing method using an actinic radiation-curable inkjet ink composition comprising at least a monomer, a pigment, a polymerization initiator and a surface tension modifier, wherein the ink composition has a surface tension at 25°C of 20 to 35 mN/m and differs by 5 to 15 mN/m in surface tension from an unmodified ink composition not comprising the surface tension modifier, the method comprising jetting the ink composition at such a temperature that a viscosity of the ink composition at a time of ink jetting of the ink composition is 5.5 to 7.5 mPa•s.
